# EUROPEAN PATENT APPLICATION

(11) **EP 4 814 050 A1**
(43) Date of publication of application: **30.09.2026**
(21) Application number: 24894067.8
(22) Date of filing: 14.11.2024
(51) Int. Cl.: C08L 23/00, C08K 5/103, C08K 5/1575, C08K 5/42

(54) **DIACETAL COMPOSITION, POLYOLEFIN-BASED RESIN COMPOSITION, MOLDED POLYOLEFIN-BASED RESIN, AND METHOD FOR PRODUCING MOLDED POLYOLEFIN-BASED RESIN**

(30) Priority: 20.11.2023 JP 2023196913
(71) Applicant: New Japan Chemical Co., Ltd., Kyoto-shi, Kyoto 612-8224 (JP)
(72) Inventor: INOUE, Takahiro, Soraku-gun, Kyoto 619-0237 (JP); IWASAKI, Shohei, Soraku-gun, Kyoto 619-0237 (JP); MATSUMOTO, Kazuya, Soraku-gun, Kyoto 619-0237 (JP); SANTAMARIA, Estibaliz, Oldham OL9 9XB (GB); PHAN, Hieu-Dinh, Oldham OL9 9XB (GB)
(74) Representative: Cabinet Beau de Loménie
(86) International application number: PCT/JP2024/040405
(87) International publication number: WO 2025/110076

(57) **Abstract**

Provided is a diacetal composition that can reduce adherence to metal, imparts excellent low-temperature processability to polyolefin resins, and has an excellent transparency-improving effect on polyolefin resins. A diacetal composition containing: (A) a diacetal compound; (B) an organic acid monoglyceride; and (C) at least one of a sulfate ester salt or a sulfonate salt, the diacetal composition containing the diacetal compound (A) in an amount of 67 to 80 parts by mass, the organic acid monoglyceride (B) in an amount of 17 to 30 parts by mass, and the at least one of the sulfate ester salt or the sulfonate salt (C) in an amount of 0.5 to 3 parts by mass, based on 100 parts by mass of a total amount of the diacetal compound (A), the organic acid monoglyceride (B), and the at least one of the sulfate ester salt or the sulfonate salt (C).

## Description

### TECHNICAL FIELD

The present invention relates to diacetal compositions, polyolefin resin compositions, polyolefin resin molded articles, and methods for producing polyolefin resin molded articles.

### BACKGROUND ART

Diacetal compounds are known as nucleating agents useful for, for example, improving the transparency of polyolefin resins such as polyethylene and polypropylene.

However, diacetal compounds have issues such as odor, low transferability (especially transferability upon discharge from storage tanks or transferability through pipes), and low flowability. Research has been made to solve these issues by, for example, adding a third component.

For example, Patent Literature 1 discloses that adding a dispersing aid such as tert-butylphenyl salicylate to a diacetal compound results in a clarifier composition with less odor and excellent transparency.

### CITATION LIST

### - Patent Literature

Patent Literature 1: WO 2019/045014

### SUMMARY OF INVENTION

### - Technical Problem

From the standpoint of energy saving, recent nucleating agents have been required to have the ability to impart low-temperature moldability (hereinafter also referred to as low-temperature processability) to polyolefin resins.

The clarifier composition of Patent Literature 1 does not sufficiently enhance the low-temperature processability of polyolefin resins and has room for further improvement.

Nucleating agents are also required to have the ability to reduce adherence, bridging, or similar trouble in pipes, feed hoppers, feeders, or other equipment during production or transport (hereinafter the ability is also referred to as adhesiveness to metal).

The clarifier composition disclosed in Patent Literature 1 is not sufficiently studied for adhesiveness to metal, and thus still has room for improvement in terms of adhesiveness to metal.

The present invention aims to provide a diacetal composition that can reduce adherence to metal, imparts excellent low-temperature processability to polyolefin resins, and has an excellent transparency-improving effect on polyolefin resins.

### - Solution to Problem

As a result of intensive studies, the present inventors found out that a diacetal composition containing (A) a diacetal compound, (B) an organic acid monoglyceride, and (C) at least one of a sulfate ester salt or a sulfonate salt each in a specific range can solve all of the above issues, thereby completing the present invention.

The present invention relates to a diacetal composition containing: (A) a diacetal compound; (B) an organic acid monoglyceride; and (C) at least one of a sulfate ester salt or a sulfonate salt, the diacetal composition containing the diacetal compound (A) in an amount of 67 to 80 parts by mass, the organic acid monoglyceride (B) in an amount of 17 to 30 parts by mass, and the at least one of the sulfate ester salt or the sulfonate salt (C) in an amount of 0.5 to 3 parts by mass, based on 100 parts by mass of a total amount of the diacetal compound (A), the organic acid monoglyceride (B), and the at least one of the sulfate ester salt or the sulfonate salt (C).

In the diacetal composition of the present invention, the diacetal compound (A) is preferably 1,3:2,4-bis-O-(3',4'-dimethylbenzylidene)-D-sorbitol.

In the diacetal composition of the present invention, the organic acid monoglyceride (B) is preferably glycerol monostearate.

In the diacetal composition of the present invention, the at least one of the sulfate ester salt or the sulfonate salt (C) is preferably sodium lauryl sulfate.

The diacetal composition of the present invention preferably contains the diacetal compound (A) in an amount of 70 to 75 parts by mass.

The diacetal composition of the present invention preferably contains the organic acid monoglyceride (B) in an amount of 20 to 25 parts by mass.

The diacetal composition of the present invention preferably contains the at least one of the sulfate ester salt or the sulfonate salt (C) in an amount of 1 to 2 parts by mass.

The diacetal composition of the present invention is preferably a nucleating agent for a polyolefin resin.

The present invention also encompasses a polyolefin resin composition containing a polyolefin resin and the diacetal composition.

The polyolefin resin composition of the present invention preferably contains the diacetal compound (A) in an amount of 1500 to 3500 ppm, the organic acid monoglyceride (B) in an amount of 500 to 1200 ppm, and the at least one of the sulfate ester salt or the sulfonate salt (C) in an amount of 12 to 120 ppm.

The present invention also encompasses a polyolefin resin molded article obtained using the polyolefin resin composition as a raw material.

The present invention also encompasses a method for producing a polyolefin resin molded article, the method including molding the polyolefin resin composition at a resin temperature of 210°C or lower to produce a polyolefin resin molded article.

### - Advantageous Effects of Invention

The present invention provides a diacetal composition that can reduce adherence to metal, imparts excellent low-temperature processability to polyolefin resins, and has an excellent transparency-improving effect on polyolefin resins.

### DESCRIPTION OF EMBODIMENTS

### <Diacetal composition>

The diacetal composition of the present invention contains (A) a diacetal compound, (B) an organic acid monoglyceride, and (C) at least one of a sulfate ester salt or a sulfonate salt, the diacetal composition containing the diacetal compound (A) in an amount of 67 to 80 parts by mass, the organic acid monoglyceride (B) in an amount of 17 to 30 parts by mass, and the at least one of the sulfate ester salt or the sulfonate salt (C) in an amount of 0.5 to 3 parts by mass, based on 100 parts by mass of a total amount of the diacetal compound (A), the organic acid monoglyceride (B), and the at least one of the sulfate ester salt or the sulfonate salt (C).

The diacetal composition of the present invention contains the diacetal compound (A), the organic acid monoglyceride (B), and the at least one of the sulfate ester salt or the sulfonate salt (C) each in a specific range, thereby reducing adherence to metal and also imparting excellent low-temperature processability to polyolefin resins and having an excellent transparency-improving effect on polyolefin resins.

In the following, each component of the diacetal composition of the present invention is described in detail.

### [(A) Diacetal compound]

The diacetal composition of the present invention contains (A) a diacetal compound (hereinafter also referred to as a component (A)).

The component (A) is preferably a diacetal compound represented by the following formula (1). 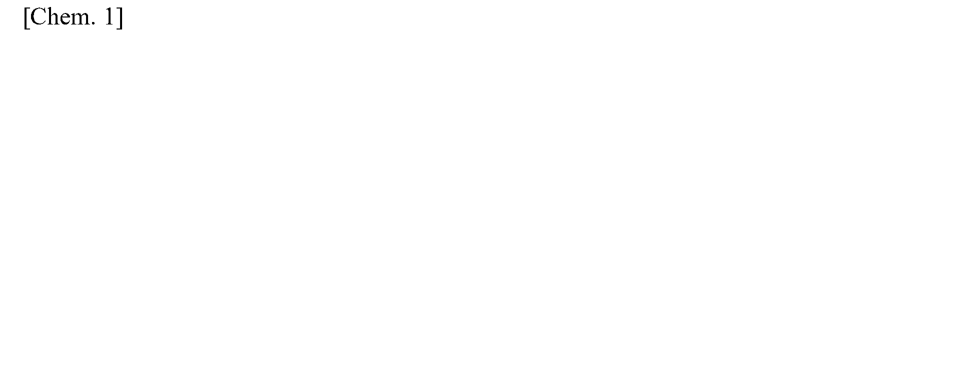 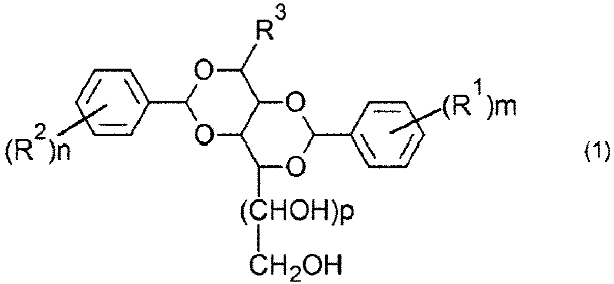 [In the formula (1), R¹ and R² are the same as or different from each other and each represent a hydrogen atom, a linear or branched C1-C4 alkyl group, a linear or branched C1-C4 alkoxy group, a linear or branched C1-C4 alkoxy carbonyl group, or a halogen atom; R³ represents a hydrogen atom, a linear or branched C1-C4 alkyl group, a linear or branched C2-C4 alkenyl group, or a linear or branched C1-C4 hydroxyalkyl group; m and n each represent an integer of 1 to 5; p represents 0 or 1; two R¹s may be bonded to each other to form a tetralin ring together with the benzene ring to which they are bonded; and two R² groups may be bonded to each other to form a tetralin ring together with the benzene ring to which they are bonded.]

Examples of preferred compounds among the components (A) include a compound represented by the formula (1) wherein R¹ and R² are the same as or different from each other and each a methyl group or an ethyl group, R³ is a hydrogen atom, m and n are each an integer of 1 or 2, and p is 1; and a compound represented by the formula (1) wherein R¹ and R² are each a propyl group or a propyloxy group, R³ is a propyl group or a propenyl group, m and n are 1, and p is 1.

Examples of more preferred compounds among the components (A) include a compound represented by the formula (1) wherein R¹ and R² are each a propyl group or a propyloxy group, R³ is a propyl group or a propenyl group, m and n are 1, and p is 1.

Specific examples of the component (A) include the following compounds: 1,3:2,4-di-O-benzylidene-D-sorbitol, 1,3:2,4-bis-O-(methylbenzylidene)-D-sorbitol, 1,3:2,4-bis-O-(o-methylbenzylidene)-D-sorbitol, 1,3:2,4-bis-O-(m-methylbenzylidene)-D-sorbitol, 1,3:2,4-bis-O-(p-methylbenzylidene)-D-sorbitol, 1,3:2,4-bis-O-(ethylbenzylidene)-D-sorbitol, 1,3:2,4-bis-O-(o-ethylbenzylidene)-D-sorbitol, 1,3:2,4-bis-O-(m-ethylbenzylidene)-D-sorbitol, 1,3:2,4-bis-O-(p-ethylbenzylidene)-D-sorbitol, 1,3:2,4-bis-O-(o-isopropylbenzylidene)-D-sorbitol, 1,3:2,4-bis-O-(m-isopropylbenzylidene)-D-sorbitol, 1,3:2,4-bis-O-(p-isopropylbenzylidene)-D-sorbitol, 1,3:2,4-bis-O-(o-n-propylbenzylidene)-D-sorbitol, 1,3:2,4-bis-O-(m-n-propylbenzylidene)-D-sorbitol, 1,3:2,4-bis-O-(p-n-propylbenzylidene)-D-sorbitol, 1,3:2,4-bis-O-(o-n-butylbenzylidene)-D-sorbitol, 1,3:2,4-bis-O-(m-n-butylbenzylidene)-D-sorbitol, 1,3:2,4-bis-O-(p-n-butylbenzylidene)-D-sorbitol, 1,3:2,4-bis-O-(o-t-butylbenzylidene)-D-sorbitol, 1,3:2,4-bis-O-(m-t-butylbenzylidene)-D-sorbitol, 1,3:2,4-bis-O-(p-t-butylbenzylidene)-D-sorbitol, 1,3:2,4-bis-O-(dimethylbenzylidene)-D-sorbitol, 1,3:2,4-bis-O-(2',3'-dimethylbenzylidene)-D-sorbitol, 1,3:2,4-bis-O-(2',4'-dimethylbenzylidene)-D-sorbitol, 1,3:2,4-bis-O-(2',5'-dimethylbenzylidene)-D-sorbitol, 1,3:2,4-bis-O-(2',6'-dimethylbenzylidene)-D-sorbitol, 1,3:2,4-bis-O-(3',4'-dimethylbenzylidene)-D-sorbitol, 1,3:2,4-bis-O-(3',5'-dimethylbenzylidene)-D-sorbitol, 1,3:2,4-bis-O-(2',3'-diethylbenzylidene)-D-sorbitol, 1,3:2,4-bis-O-(2',4'-diethylbenzylidene)-D-sorbitol, 1,3:2,4-bis-O-(2',5'-diethylbenzylidene)-D-sorbitol, 1,3:2,4-bis-O-(2',6'-diethylbenzylidene)-D-sorbitol, 1,3:2,4-bis-O-(3',4'-diethylbenzylidene)-D-sorbitol, 1,3:2,4-bis-O-(3',5'-diethylbenzylidene)-D-sorbitol, 1,3:2,4-bis-O-(o-fluorobenzylidene)-D-sorbitol, 1,3:2,4-bis-O-(m-fluorobenzylidene)-D-sorbitol, 1,3:2,4-bis-O-(p-fluorobenzylidene)-D-sorbitol, 1,3:2,4-bis-O-(o-chlorobenzylidene)-D-sorbitol, 1,3:2,4-bis-O-(m-chlorobenzylidene)-D-sorbitol, 1,3:2,4-bis-O-(p-chlorobenzylidene)-D-sorbitol, 1,3:2,4-bis-O-(o-bromobenzylidene)-D-sorbitol, 1,3:2,4-bis-O-(m-bromobenzylidene)-D-sorbitol, 1,3:2,4-bis-O-(p-bromobenzylidene)-D-sorbitol, 1,3-O-benzylidene-2,4-O-(p-methylbenzylidene)-D-sorbitol, 1,3:2,4-bis-O-(3',4'-dichlorobenzylidene)-D-sorbitol, 1,3:2,4-bis-O-benzylidene-1-methyl sorbitol, 1,3:2,4-bis-O-(p-methylbenzylidene)-1-methyl sorbitol, 1,3:2,4-bis-O-(p-ethylbenzylidene)-1-methyl sorbitol, 1,3:2,4-bis-O-(p-n-propylbenzylidene)-1-methyl sorbitol, 1,3:2,4-bis-O-(2',3'-dimethylbenzylidene)-1-methyl sorbitol, 1,3:2,4-bis-O-(2',4'-dimethylbenzylidene)-1-methyl sorbitol, 1,3:2,4-bis-O-(2',5'-dimethylbenzylidene)-1-methyl sorbitol, 1,3:2,4-bis-O-(2',6'-dimethylbenzylidene)-1-methyl sorbitol, 1,3:2,4-bis-O-(3',4'-dimethylbenzylidene)-1-methyl sorbitol, 1,3:2,4-bis-O-(3',5'-dimethylbenzylidene)-1-methyl sorbitol, 1,3:2,4-bis-O-(2',3'-diethylbenzylidene)-1-methyl sorbitol, 1,3:2,4-bis-O-(2',4'-diethylbenzylidene)-1-methyl sorbitol, 1,3:2,4-bis-O-(2',5'-diethylbenzylidene)-1-methyl sorbitol, 1,3:2,4-bis-O-(2',6'-diethylbenzylidene)-1-methyl sorbitol, 1,3:2,4-bis-O-(3',4'-diethylbenzylidene)-1-methyl sorbitol, 1,3:2,4-bis-O-(3',5'-diethylbenzylidene)-1-methyl sorbitol, 1,3:2,4-bis-O-(3',4'-dichlorobenzylidene)-1-methyl sorbitol, 1,3:2,4-bis-O-benzylidene-1-ethyl sorbitol, 1,3:2,4-bis-O-(p-methylbenzylidene)-1-ethyl sorbitol, 1,3:2,4-bis-O-(p-ethylbenzylidene)-1-ethyl sorbitol, 1,3:2,4-bis-O-(p-n-propylbenzylidene)-1-ethyl sorbitol, 1,3:2,4-bis-O-(2',3'-dimethylbenzylidene)-1-ethyl sorbitol, 1,3:2,4-bis-O-(2',4'-dimethylbenzylidene)-1-ethyl sorbitol, 1,3:2,4-bis-O-(2',5'-dimethylbenzylidene)-1-ethyl sorbitol, 1,3:2,4-bis-O-(2',6'-dimethylbenzylidene)-1-ethyl sorbitol, 1,3:2,4-bis-O-(3',4'-dimethylbenzylidene)-1-ethyl sorbitol, 1,3:2,4-bis-O-(3',5'-dimethylbenzylidene)-1-ethyl sorbitol, 1,3:2,4-bis-O-(2',3'-diethylbenzylidene)-1-ethyl sorbitol, 1,3:2,4-bis-O-(2',4'-diethylbenzylidene)-1-ethyl sorbitol, 1,3:2,4-bis-O-(2',5'-diethylbenzylidene)-1-ethyl sorbitol, 1,3:2,4-bis-O-(2',6'-diethylbenzylidene)-1-ethyl sorbitol, 1,3:2,4-bis-O-(3',4'-diethylbenzylidene)-1-ethyl sorbitol, 1,3:2,4-bis-O-(3',5'-diethylbenzylidene)-1-ethyl sorbitol, 1,3:2,4-bis-O-(3',4'-dichlorobenzylidene)-1-ethyl sorbitol, 1,3:2,4-bis-O-benzylidene-1-n-propyl sorbitol, 1,3:2,4-bis-O-(p-methylbenzylidene)-1-n-propyl sorbitol, 1,3:2,4-bis-O-(p-ethylbenzylidene)-1-n-propyl sorbitol, 1,3:2,4-bis-O-(p-n-propylbenzylidene)-1-n-propyl sorbitol, 1,3:2,4-bis-O-(2',3'-dimethylbenzylidene)-1-n-propyl sorbitol, 1,3:2,4-bis-O-(2',4'-dimethylbenzylidene)-1-n-propyl sorbitol, 1,3:2,4-bis-O-(2',5'-dimethylbenzylidene)-1-n-propyl sorbitol, 1,3:2,4-bis-O-(2',6'-dimethylbenzylidene)-1-n-propyl sorbitol, 1,3:2,4-bis-O-(3',4'-dimethylbenzylidene)-1-n-propyl sorbitol, 1,3:2,4-bis-O-(3',5'-dimethylbenzylidene)-1-n-propyl sorbitol, 1,3:2,4-bis-O-(2',3'-diethylbenzylidene)-1-n-propyl sorbitol, 1,3:2,4-bis-O-(2',4'-diethylbenzylidene)-1-n-propyl sorbitol, 1,3:2,4-bis-O-(2',5'-diethylbenzylidene)-1-n-propyl sorbitol, 1,3:2,4-bis-O-(2',6'-diethylbenzylidene)-1-n-propyl sorbitol, 1,3:2,4-bis-O-(3',4'-diethylbenzylidene)-1-n-propyl sorbitol, 1,3:2,4-bis-O-(3',5'-diethylbenzylidene)-1-n-propyl sorbitol, and 1,3:2,4-bis-O-(3',4'-dichlorobenzylidene)-1-n-propyl sorbitol.

Examples of preferred components (A) include 1,3:2,4-bis-O-(p-methylbenzylidene)-D-sorbitol, 1,3:2,4-bis-O-(p-ethylbenzylidene)-D-sorbitol, 1,3:2,4-bis-O-(3',4'-dimethylbenzylidene)-D-sorbitol, 1,3:2,4-bis-O-(p-n-propylbenzylidene)-1-propyl sorbitol, and 1,3:2,4-di-O-benzylidene-D-sorbitol.

Each component (A) may be used alone, or two or more components (A) may be used in combination or in a pre-mixed form.

From the standpoint of transparency improvement and odor reduction, the component (A) is particularly preferably 1,3:2,4-bis-O-(3',4'-dimethylbenzylidene)-D-sorbitol.

The amount of the component (A) is 67 to 80 parts by mass based on 100 parts by mass of the total amount of the component (A), the organic acid monoglyceride (B), and the at least one of the sulfate ester salt or the sulfonate salt (C).

From the standpoint of transparency and powder flowability, the amount of the component (A) is preferably 70 to 75 parts by mass.

### [(B) Organic acid monoglyceride]

The diacetal composition of the present invention contains (B) an organic acid monoglyceride (hereinafter also referred to as a component (B)).

The component (B) is preferably a monoester compound of glycerol with a C10-C28 saturated or unsaturated aliphatic monocarboxylic acid and/or a C10-C28 saturated or unsaturated aliphatic monocarboxylic acid having one or two hydroxy groups in a molecule.

The component (B) is more preferably a monoester compound of glycerol with a C12-C22 saturated or unsaturated aliphatic monocarboxylic acid and/or a C12-C22 saturated or unsaturated aliphatic monocarboxylic acid having one or two hydroxy groups in a molecule.

The C10-C28 saturated or unsaturated aliphatic monocarboxylic acid preferably has 12 to 22 carbon atoms, more preferably 16 to 18 carbon atoms.

The C12-C22 saturated or unsaturated aliphatic monocarboxylic acid having one or two hydroxy groups in a molecule preferably has one hydroxy group in a molecule and preferably has 12 to 22 carbon atoms, more preferably 16 to 18 carbon atoms.

Specific examples include: monoglycerides of saturated fatty acids such as lauric acid, myristic acid, palmitic acid, stearic acid, nonadecanoic acid, arachidic acid, behenic acid, and lignoceric acid; monoglycerides of unsaturated fatty acids such as palmitoleic acid, oleic acid, elaidic acid, gadoleic acid, erucic acid, nervonic acid, linoleic acid, eicosadienoic acid, docosadienoic acid, linolenic acid, stearidonic acid, arachidonic acid, eicosapentaenoic acid, docosahexaenoic acid, and undecylenic acid; and glycerides of fatty acids with branched chains or substituents, such as isostearic acid, ricinoleic acid, 12-hydroxystearic acid, 9-hydroxystearic acid, 10-hydroxystearic acid, and hydrogenated castor oil fatty acids (fatty acids containing 12-hydroxystearic acid and small amounts of stearic acid and palmitic acid).

Each component (B) may be used alone, or two or more components (B) may be used in combination or in a pre-mixed form.

From the standpoint of transparency improvement, the component (B) is particularly preferably glycerol monostearate, which is a monoester compound of glycerol with stearic acid.

The amount of the component (B) is 17 to 30 parts by mass based on 100 parts by mass of the total amount of the component (A), the component (B), and the at least one of the sulfate ester salt or the sulfonate salt (C).

From the standpoint of transparency improvement and bleeding reduction, the amount of the component (B) is preferably 20 to 25 parts by mass.

### [(C) At least one of sulfate ester salt or sulfonate salt]

The diacetal composition of the present invention contains (C) at least one of a sulfate ester salt or a sulfonate salt (hereinafter also referred to as a component (C)).

The component (C) is preferably one or two or more compounds selected from the group consisting of a C8-C24 alkyl sulfate ester salt, a polyoxyethylene alkyl (C8-C22) ether sulfate ester salt with an average number of moles of added oxyethylene groups (EO) of 1 to 5, and a C6-C20 linear alkyl benzenesulfonate salt.

Preferred salts are sodium salt, potassium salt, lithium salt, ammonium salt, and triethanolamine salt.

Examples of the C8-C24 alkyl sulfate ester salt include sodium n-octyl sulfate, sodium 2-ethylhexyl sulfate, sodium n-decyl sulfate, sodium lauryl sulfate, sodium myristyl sulfate, sodium palmityl sulfate, sodium stearyl sulfate, sodium arachidyl sulfate, sodium behenyl sulfate, sodium isostearyl sulfate, sodium C12-C14 alkyl sulfates, sodium coconut oil alkyl sulfates, sodium palm oil alkyl sulfates, sodium palm kernel oil alkyl sulfates, sodium soybean oil alkyl sulfates, potassium n-octyl sulfate, potassium 2-ethylhexyl sulfate, potassium n-decyl sulfate, potassium lauryl sulfate, potassium myristyl sulfate, potassium palmityl sulfate, potassium stearyl sulfate, potassium arachidyl sulfate, potassium behenyl sulfate, potassium isostearyl sulfate, potassium C12-C14 alkyl sulfates, potassium coconut oil alkyl sulfates, potassium palm oil alkyl sulfates, potassium palm kernel oil alkyl sulfates, potassium soybean oil alkyl sulfates, ammonium n-octyl sulfate, ammonium 2-ethylhexyl sulfate, ammonium n-decyl sulfate, ammonium lauryl sulfate, ammonium myristyl sulfate, ammonium palmityl sulfate, ammonium stearyl sulfate, ammonium arachidyl sulfate, ammonium behenyl sulfate, ammonium isostearyl sulfate, ammonium C12-C14 alkyl sulfates, ammonium coconut oil alkyl sulfates, ammonium palm oil alkyl sulfates, ammonium palm kernel oil alkyl sulfates, and ammonium soybean oil alkyl sulfates.

Examples of the polyoxyethylene alkyl (C8-C22) ether sulfate ester salt with an average number of moles of added oxyethylene groups (EO) of 1 to 5 include sodium polyoxyethylene (average number of moles of added EO: 1 to 5)-n-octyl ether sulfate, sodium polyoxyethylene (average number of moles of added EO: 1 to 5)-2-ethylhexyl ether sulfate, sodium polyoxyethylene (average number of moles of added EO: 1 to 5)-n-decyl ether sulfate, sodium polyoxyethylene (average number of moles of added EO: 1 to 5) lauryl ether sulfate, sodium polyoxyethylene (average number of moles of added EO: 1 to 5) myristyl ether sulfate, sodium polyoxyethylene (average number of moles of added EO: 1 to 5) palmityl ether sulfate, sodium polyoxyethylene (average number of moles of added EO: 1 to 5) stearyl ether sulfate, sodium polyoxyethylene (average number of moles of added EO: 1 to 5) arachidyl ether sulfate, sodium polyoxyethylene (average number of moles of added EO: 1 to 5) behenyl ether sulfate, sodium polyoxyethylene (average number of moles of added EO: 1 to 5) isostearyl ether sulfate, sodium polyoxyethylene (average number of moles of added EO: 1 to 5) coconut oil alkyl ether sulfates, sodium polyoxyethylene (average number of moles of added EO: 1 to 5) palm oil alkyl ether sulfates, sodium polyoxyethylene (average number of moles of added EO: 1 to 5) palm kernel oil alkyl ether sulfates, sodium polyoxyethylene (average number of moles of added EO: 1 to 5) soybean oil alkyl ether sulfates, potassium polyoxyethylene (average number of moles of added EO: 1 to 5) n-octyl ether sulfate, potassium polyoxyethylene (average number of moles of added EO: 1 to 5)-2-ethylhexyl ether sulfate, potassium polyoxyethylene (average number of moles of added EO: 1 to 5)-n-decyl ether sulfate, potassium polyoxyethylene (average number of moles of added EO: 1 to 5) lauryl ether sulfate, potassium polyoxyethylene (average number of moles of added EO: 1 to 5) myristyl ether sulfate, potassium polyoxyethylene (average number of moles of added EO: 1 to 5) palmityl ether sulfate, potassium polyoxyethylene (average number of moles of added EO: 1 to 5) stearyl ether sulfate, potassium polyoxyethylene (average number of moles of added EO: 1 to 5) arachidyl ether sulfate, potassium polyoxyethylene (average number of moles of added EO: 1 to 5) behenyl ether sulfate, potassium polyoxyethylene (average number of moles of added EO: 1 to 5) isostearyl ether sulfate, potassium polyoxyethylene (average number of moles of added EO: 1 to 5) coconut oil alkyl ether sulfates, potassium polyoxyethylene (average number of moles of added EO: 1 to 5) palm oil alkyl ether sulfates, potassium polyoxyethylene (average number of moles of added EO: 1 to 5) palm kernel oil alkyl ether sulfates, and potassium polyoxyethylene (average number of moles of added EO: 1 to 5) soybean oil alkyl ether sulfates.

Examples of the C6-C20 linear alkyl benzenesulfonate salt include sodium decyl benzenesulfonate, sodium undecyl benzenesulfonate, sodium dodecyl benzenesulfonate, sodium tridecyl benzenesulfonate, sodium tetradecyl benzenesulfonate, sodium C6-C14 linear alkyl benzenesulfonates, sodium C6-C16 linear alkyl benzenesulfonates, sodium C6-C20 linear alkyl benzenesulfonates, sodium C10-C16 linear alkyl benzenesulfonates, sodium C10-C13 linear alkyl benzenesulfonates, sodium C10-C14 linear alkyl benzenesulfonates, potassium decyl benzenesulfonate, potassium undecyl benzenesulfonate, potassium dodecyl benzenesulfonate, potassium tridecyl benzenesulfonate, potassium tetradecyl benzenesulfonate, potassium C6-C14 linear alkyl benzenesulfonates, potassium C6-C16 linear alkyl benzenesulfonates, potassium C6-C20 linear alkyl benzenesulfonates, potassium C10-C16 linear alkyl benzenesulfonates, potassium C10-C13 linear alkyl benzenesulfonates, and potassium C10-C14 linear alkyl benzenesulfonates.

Each component (C) may be used alone, or two or more components (C) may be used in combination or in a pre-mixed form.

From the standpoint of improvement of the low-temperature processability, the component (C) is particularly preferably sodium lauryl sulfate.

The amount of the component (C) is 0.5 to 3 parts by mass based on 100 parts by mass of the total amount of the component (A), the component (B), and the component (C).

From the standpoint of improvement of the low-temperature processability, the amount of the component (C) is preferably 1 to 2 parts by mass.

### [Other components]

The diacetal composition of the present invention may contain a conventionally known modifier for polyolefin.

Examples of the modifier for polyolefin include the additives listed in "The Tables of Positive Lists of Additives" edited by Japan Hygienic Olefin And Styrene Plastics Association (January, 2002). Specific examples include stabilizers (e.g., metal compounds, epoxy compounds, nitrogen compounds, phosphorus compounds, sulfur compounds), UV absorbers (e.g., benzophenone compounds, benzotriazole compounds), lubricants (e.g., aliphatic hydrocarbons such as paraffin and waxes, C8-C22 higher fatty acid metal (Al, Ca, Mg, Zn) salts, C8-C22 higher aliphatic alcohols, C8-C22 higher fatty acid amides, silicone oils, rosin derivatives), fillers (e.g., talc, hydrotalcite, mica, zeolite, perlite, diatomaceous earth, calcium carbonate, glass fibers), foaming agents, foaming aids, polymer additives, as well as plasticizers (e.g., dialkyl phthalates, dialkyl hexahydrophthalates), crosslinking agents, crosslinking accelerators, antistatic agents, flame retardants, dispersants, other colorant compounds (e.g., dyes, pigments), processing aids, other nucleating agents, and various other additives.

### [Nucleating agent]

Since the diacetal composition of the present invention imparts excellent low-temperature processability to polyolefin resins and has an excellent transparency-improving effect on polyolefin resins, the diacetal composition of the present invention is preferably used as a nucleating agent for a polyolefin resin.

### <Method for producing diacetal composition>

The method for producing the diacetal composition of the present invention preferably includes, for example, mixing and stirring the diacetal compound (A), the organic acid monoglyceride (B), and the at least one of the sulfate ester salt or the sulfonate salt (C) such that the amount of the diacetal compound (A) is 67 to 80 parts by mass, the amount of the organic acid monoglyceride (B) is 17 to 30 parts by mass, and the amount of the at least one of the sulfate ester salt or the sulfonate salt (C) is 0.5 to 3 parts by mass, based on 100 parts by mass of the total amount of the diacetal compound (A), the organic acid monoglyceride (B), and the at least one of the sulfate ester salt or the sulfonate salt (C).

Such a mixing method is not limited as long as the desired diacetal composition is obtained. Examples of the method include i) a method including adding the component (B) and the component (C) during the process of producing the diacetal compound represented by the formula (1) using sorbitol and a corresponding benzaldehyde in accordance with any of various conventional methods (e.g., the method disclosed in JP H02-231488); ii) a method including powder-mixing the component (B) and the component (C) with the diacetal compound represented by the formula (1) using a mixer such as a Henschel mixer, a V blender, or a ribbon blender; and iii) a method including adding the components (B) and (C) in the predetermined amounts, either directly or in the form of solution in a solvent such as a C1-C4 lower alcohol (e.g., methanol, ethanol, propanol, butanol) or water, into a slurry of the diacetal compound represented by the formula (1) in a dispersion medium such as a C1-C4 lower alcohol (e.g., methanol, ethanol, propanol, butanol) or water, followed by evaporating off the solvent.

Regarding the method i), the component (B) and component (C) are preferably added in the predetermined amounts when or after the diacetal compound represented by the formula (1) is generated by diacetalization reaction of the sorbitol and the benzaldehyde.

Regarding the method iii), the concentration of the diacetal compound in the slurry is not limited, but generally preferably about 10 to 60% by mass.

The temperature of the slurry can be selected from a broad range, but is generally preferably 20°C to 100°C.

The obtained diacetal composition containing the component (B) and the component (C) may be pulverized/crushed, or granulated and classified, as necessary.

The form of the diacetal composition of the present invention may be appropriately selected from common forms such as powder, grains, or granulated products such as granules, cylinders, or pellets.

When the diacetal composition is in a powder form, the average particle diameter thereof is 3 to 2000 µm, preferably 7 to 200 µm. An average particle diameter of less than 3 µm tends to lead to poor powder properties, and also necessitates a special pulverizing device.

When the diacetal composition is in a grain form, the grain-form diacetal composition in a desired shape and size can be obtained from the powder-form diacetal composition obtained by the above-described method. Such a grain-form diacetal composition has the advantages of reduced dust generation and improved powder flowability compared to the powder-form diacetal composition.

Any of the forms can be produced using known equipment such as granulators, pulverizers/crushers, or classifiers. For example, granulators include dry or wet extrusion granulators, mixing granulators, tablet machines, dry compression roll granulators, and spherical granulators. Pulverizers/crushers include pin mills, jet mills, pulverizers, cutter mills, hammer mills, planer crushers, flake crushers, and nibblers. Classifiers include vibrating screens and air classifiers.

### <Polyolefin resin composition>

The polyolefin resin composition of the present invention contains a polyolefin resin and the diacetal composition described above.

### [Polyolefin resin]

The polyolefin resin may be a conventionally known polyolefin resin. Examples thereof include polyethylene resins, polypropylene resins, polybutene resins, polymethylpentene resins, and polybutadiene resins.

Specific examples include high-density polyethylene, medium-density polyethylene, linear polyethylene, ethylene copolymers containing 50% by mass or more, preferably 70% by mass or more of ethylene, propylene homopolymers, propylene copolymers containing 50% by mass or more, preferably 70% by mass or more of propylene, butene homopolymers, butene copolymers containing 50% by mass or more, preferably 70% by mass or more of butene, methylpentene homopolymers, methylpentene copolymers containing 50% by mass or more, preferably 70% or more by mass or more of methylpentene, and polybutadiene.

The copolymers may be random or block copolymers.

These resins may be isotactic or syndiotactic if they have tacticity.

Specific examples of comonomers that can constitute the copolymers include C2-C12 α-olefins such as ethylene, propylene, butene, pentene, hexene, heptene, octene, nonene, decene, undecene, and dodecene, bicyclic monomers such as 1,4-endomethylene cyclohexene, (meth)acrylates such as methyl (meth)acrylate and ethyl (meth)acrylate, and vinyl acetate.

The polyolefin resin preferably has a melt flow rate (hereinafter abbreviated as "MFR", JIS K7210-1:2014) of about 0.01 to 200 g/10 min, more preferably about 0.05 to 100 g/10 min.

The method for producing the polyolefin resin is not limited, and it may be produced using any known method.

### [Diacetal composition]

The diacetal composition to be used may be the diacetal composition of the present invention.

The amount of the diacetal composition is preferably 0.001 to 10 parts by mass relative to 100 parts by mass of the polyolefin resin, for example.

The amount of the component (A) in the polyolefin resin composition is preferably 1500 to 3500 ppm, more preferably 2000 to 3000 ppm, still more preferably 2000 to 2500 ppm.

The amount of the component (B) in the polyolefin resin composition is preferably 500 to 1200 ppm, more preferably 500 to 1000 ppm, still more preferably 500 to 900 ppm.

The amount of the component (C) in the polyolefin resin composition is preferably 12 to 120 ppm, more preferably 15 to 100 ppm.

When the amounts of the component (A), the component (B), and the component (C) in the polyolefin resin composition are in the above ranges, the low-temperature processability of the polyolefin resin and the transparency-improving effect can be more suitably imparted.

### [Other components]

The polyolefin resin composition of the present invention may contain an additive according to the purpose thereof or the application thereof.

Examples of the additive include the additives listed in "The Tables of Positive Lists of Additives" edited by Japan Hygienic Olefin And Styrene Plastics Association (September, 2004).

Specific examples include fluorescent brighteners (e.g., 2,5- thiophenediyl (5-t-butyl-1,3-benzoxazole), 4,4'-bis(benzoxazol-2-yl)stilbene), antioxidants, stabilizers (e.g., metal compounds, epoxy compounds, nitrogen compounds, phosphorus compounds, sulfur compounds), UV absorbers (e.g., benzophenone compounds, benzotriazole compounds), surfactants, lubricants (e.g., aliphatic hydrocarbons such as paraffin and waxes, C8-C22 higher fatty acids, C8-C22 higher fatty acid metal (Al, Ca) salts, C8-C22 higher aliphatic alcohols, polyglycols, esters of C4-C22 higher fatty acids with C4-C18 aliphatic monohydric alcohols, C8-C22 higher fatty acid amides, silicone oils, rosin derivatives), fillers (e.g., talc, hydrotalcite, mica, zeolite, perlite, diatomaceous earth, calcium carbonate, glass fibers), foaming agents, foaming aids, polymer additives, plasticizers (e.g., dialkyl phthalates, dialkyl hexahydrophthalates), crosslinking agents, crosslinking accelerators, antistatic agents, flame retardants, dispersants, organic and inorganic pigments (e.g., indigo compounds, phthalocyanine compounds, anthraquinone compounds, ultramarine compounds, cobalt aluminate compounds), processing aids, and other nucleating agents.

The amount of the additive is about 0.0001 to 100 parts by mass relative to 100 parts by mass of the polyolefin resin, for example.

### [Method for producing polyolefin resin composition]

The polyolefin resin composition of the present invention can be obtained, for example, by dry blending the materials described above at room temperature and then melt-mixing the materials under predetermined conditions.

### <Polyolefin resin molded article>

The polyolefin resin molded article of the present invention is obtained using the polyolefin resin composition as a raw material.

The polyolefin resin molded article of the present invention can be obtained by molding the polyolefin resin composition of the present invention in accordance with a common molding method.

The molding method may be any conventionally known method such as injection molding, extrusion molding, blow molding, pressure forming, rotation molding, and film forming.

The polyolefin resin composition of the present invention can be molded at a resin temperature of 210°C or lower to produce a polyolefin resin molded article.

Such a production method is encompassed by the present invention.

The following matters are disclosed herein.

The disclosure (1) relates to a diacetal composition containing: (A) a diacetal compound; (B) an organic acid monoglyceride; and (C) at least one of a sulfate ester salt or a sulfonate salt, the diacetal composition containing the diacetal compound (A) in an amount of 67 to 80 parts by mass, the organic acid monoglyceride (B) in an amount of 17 to 30 parts by mass, and the at least one of the sulfate ester salt or the sulfonate salt (C) in an amount of 0.5 to 3 parts by mass, based on 100 parts by mass of a total amount of the diacetal compound (A), the organic acid monoglyceride (B), and the at least one of the sulfate ester salt or the sulfonate salt (C).

The disclosure (2) relates to the diacetal composition according to the disclosure (1), wherein the diacetal compound (A) is 1,3:2,4-bis-O-(3',4'-dimethylbenzylidene)-D-sorbitol.

The disclosure (3) relates to the diacetal composition according to the disclosure (1) or (2), wherein the organic acid monoglyceride (B) is glycerol monostearate.

The disclosure (4) relates to the diacetal composition according to any of the disclosures (1) to (3), wherein the at least one of the sulfate ester salt or the sulfonate salt (C) is sodium lauryl sulfate.

The disclosure (5) relates to the diacetal composition according to any of the disclosures (1) to (4), containing the diacetal compound (A) in an amount of 70 to 75 parts by mass.

The disclosure (6) relates to the diacetal composition according to any of the disclosures (1) to (5), containing the organic acid monoglyceride (B) in an amount of 20 to 25 parts by mass.

The disclosure (7) relates to the diacetal composition according to any of the disclosures (1) to (6), containing the at least one of the sulfate ester salt or the sulfonate salt (C) in an amount of 1 to 2 parts by mass.

The disclosure (8) relates to the diacetal composition according to any of the disclosures (1) to (7), which is a nucleating agent for a polyolefin resin.

The disclosure (9) relates to a polyolefin resin composition containing: a polyolefin resin; and the diacetal composition according to any of the disclosures (1) to (8).

The disclosure (10) relates to the polyolefin resin composition according to the disclosure (9), containing the diacetal compound (A) in an amount of 1500 to 3500 ppm, the organic acid monoglyceride (B) in an amount of 500 to 1200 ppm, and the at least one of the sulfate ester salt or the sulfonate salt (C) in an amount of 12 to 120 ppm.

The disclosure (11) also relates to a polyolefin resin molded article obtained using the polyolefin resin composition according to the disclosure (9) or (10) as a raw material.

The disclosure (12) relates to a method for producing a polyolefin resin molded article, the method including molding the polyolefin resin composition according to the disclosure (9) or (10) at a resin temperature of 210°C or lower to produce a polyolefin resin molded article.

### EXAMPLES

In the following, the present invention is further described in detail with reference to examples. The present invention is not limited by these examples. The compounds used were reagents unless otherwise specified.

The materials used in the examples and comparative examples are as follows.
[Component (A)]
   1,3:2,4-Bis-O-(3',4'-dimethylbenzylidene)-D-sorbitol (hereinafter also referred to as "DMDBS")
[Component (B)]
   Glycerol monostearate (hereinafter also referred to as "GMS")
[Component (C)]
   Sodium lauryl sulfate (hereinafter also referred to as "SLS")
[Polyolefin resin]
   Resin (P-1): isotactic random polypropylene resin (MFR = 30 g/10 min)
   Resin (P-2): isotactic homopolypropylene resin (MFR = 10 g/10 min)
   Resin (P-3): isotactic random polypropylene resin (MFR = 40 g/10 min)

### [Production of diacetal composition]

### (Examples 1 to 4 and Comparative Examples 1 to 9)

DMDBS [component (A)], GMS [component (B)] and SLS [component (C)] were mixed in accordance with the formulation shown in Table 1, and methanol was added to the mixture. The materials were mixed in methanol under reflux for one hour to provide a mixture in a white paste form.

Subsequently, most of the methanol was removed under reduced pressure, followed by vacuum drying at 133 Pa and 50°C for four hours with stirring.

Then, the resulting product was passed through a 70-mesh JIS standard sieve (aperture 212 µm) to remove coarse particles, whereby a diacetal-containing composition in a powder form was prepared.

### <Evaluation of adhesiveness to metal>

The produced diacetal composition was mixed in a metal mixing bowl. The degree of adherence to the inner wall of the mixing bowl was observed and evaluated in accordance with the following criteria. Table 1 shows the results. Here, "∘" was considered "pass" for this evaluation.

### (Evaluation criteria)

∘: No adherence was observed at all.
△: Slight adherence was observed.
×: Adherence was observed.

**[Table 1]**

| | Diacetal composition | | | | | | Property Evaluation |
|---|---|---|---|---|---|---|---|
| | Component (A) | | Component (B) | | Component (C) | | Adhesiveness to metal |
| | Type | Amount (parts by mass) | Type | Amount (parts by mass) | Type | Amount (parts by mass) | |
| Example 1 | DMDBS | 73.5 | GMS | 25.0 | SLS | 1.5 | ○ |
| Example 2 | DMDBS | 74.3 | GMS | 25.0 | SLS | 0.7 | ○ |
| Example 3 | DMDBS | 68.0 | GMS | 30.0 | SLS | 2.0 | ○ |
| Example 4 | DMDBS | 77.0 | GMS | 20.0 | SLS | 3.0 | ○ |
| Comparative Example 1 | DMDBS | 100.0 | GMS | 0.0 | SLS | 0.0 | × |
| Comparative Example 2 | DMDBS | 84.3 | GMS | 14.0 | SLS | 1.7 | × |
| Comparative Example 3 | DMDBS | 90.6 | GMS | 7.6 | SLS | 1.8 | × |
| Comparative Example 4 | DMDBS | 94.9 | GMS | 3.2 | SLS | 1.9 | × |
| Comparative Example 5 | DMDBS | 75.0 | GMS | 25.0 | SLS | 0.0 | ○ |
| Comparative Example 6 | DMDBS | 98.0 | GMS | 0.0 | SLS | 2.0 | × |
| Comparative Example 7 | DMDBS | 74.9 | GMS | 25.0 | SLS | 0.1 | ○ |
| Comparative Example 8 | DMDBS | 63.5 | GMS | 35.0 | SLS | 1.5 | ○ |
| Comparative Example 9 | DMDBS | 70.0 | GMS | 25.0 | SLS | 5.0 | ○ |

### [Preparation of polyolefin resin composition and polyolefin resin molded article]

### (Example 5)

To 100 parts by mass of the resin (P-1) were added 0.2 parts by mass of the diacetal composition produced in Example 1, 0.05 parts by mass of calcium stearate, 0.05 parts by mass of tetrakis[methylene-2-(3,5-di-tert-butyl-4-hydroxyphenyl)propionate]methane (tradename Irganox^{®} 1010, available from BASF), and 0.05 parts by mass of tris(2,4-di-tert-butylphenyl)phosphite (tradename Irgafos^{®} 168, available from BASF). The materials were dry-blended using a Henschel mixer (1500 rpm, 2 min).

Subsequently, the resulting mixture was melt-kneaded and extruded using an extruder (24 mmφ, L/D = 28/1, rotation rate 100 rpm) at a resin temperature of 210°C. The obtained strands were water-cooled and cut into pellets to provide a polyolefin resin composition.

The produced polyolefin resin composition was injection-molded at a resin temperature of 210°C and a mold temperature of 20°C into a polyolefin resin molded article (specimen) with a size of 75 mm × 75 mm × 2 mm in thickness.

### (Examples 6 to 8 and Comparative Examples 10 and 11)

A polyolefin resin composition was produced and molded into a polyolefin resin molded article (specimen) as in Example 5, except that the diacetal composition was changed as shown in Table 2.

### (Example 9)

A polyolefin resin composition was produced and molded into a polyolefin resin molded article (specimen) as in Example 5, except that the resin (P-1) was changed to the resin (P-2).

### (Examples 10 to 12 and Comparative Examples 12 to 18)

A polyolefin resin composition was produced and molded into a polyolefin resin molded article (specimen) as in Example 9, except that the diacetal composition was changed as shown in Table 3.

### (Example 13)

A polyolefin resin composition was produced and molded into a polyolefin resin molded article (specimen) as in Example 5, except that the resin (P-1) was changed to the resin (P-3) and the resin temperature in the extruder and injection molding was changed from 210°C to 190°C.

### (Examples 14 and 15 and Comparative Examples 19 to 21)

A polyolefin resin composition was produced and molded into a polyolefin resin molded article (specimen) as in Example 13, except that the diacetal composition was changed as shown in Table 4.

### (Example 16)

A polyolefin resin composition was produced and molded into a polyolefin resin molded article (specimen) as in Example 5, except that the resin (P-1) was changed to the resin (P-3).

### (Examples 17 and 18 and Comparative Examples 22 to 24)

A polyolefin resin composition was produced and molded into a polyolefin resin molded article (specimen) as in Example 16, except that the diacetal composition was changed as shown in Table 5.

### <Evaluation of transparency-improving effect>

The haze value of the produced polyolefin resin molded article (specimen) was measured in conformity with ASTM D1003-61 using a haze meter (available from BYK-Gardner, product name Haze Gard Plus). A lower haze value indicates higher transparency.

Furthermore, the evaluation was made as follows based on how much the haze value was improved compared to the haze value of a polyolefin resin molded article (specimen) produced using the same amount of the diacetal composition of Comparative Example 1. Tables 2 to 5 show the results. Here, "∘∘" and "∘" were considered "pass" for this evaluation.

### (Evaluation criteria)

∘∘: Improved 10% or more.
∘: Improved 5% or more and less than 10%
×: Improved less than 5% (no improvement)

Regarding "Haze value improvement percent (%)" in Table 2, the haze value improvement percents of Examples 5 and 6 represent the percentages of improvement compared to the haze value of Comparative Example 10 <[{(Haze value of Comparative Example 10) - (Haze value of Example 5 or 6)}/(Haze value of Comparative Example 10)] × 100>.

The values of Examples 7 and 8 represent improvement in the haze value compared to the haze value of Comparative Example 11 <[{(Haze value of Comparative Example 11) - (Haze value of Example 7 or 8)}/(Haze value of Comparative Example 11)] × 100>.

Similarly, the values of "Haze value improvement percent (%)" in Table 3 represent improvement in the haze value compared to the haze value of Comparative Example 12 <[{(Haze value of Comparative Example 12) - (Haze value of one of Examples 9 to 12 or Comparative Examples 13 to 18))}/(Haze value of Comparative Example 12)] × 100>.

Regarding "Haze value improvement percent (%)" in Table 4, the value of Example 13 represents improvement in the haze value compared to the haze value of Comparative Example 19 <[{(Haze value of Comparative Example 19) - (Haze value of Example 13))}/(Haze value of Comparative Example 19)] × 100>.

The value of Example 14 represents improvement in the haze value compared to the haze value of Comparative Example 20 <[{(Haze value of Comparative Example 20) - (Haze value of Example 14)}/(Haze value of Comparative Example 20)] × 100>.

The value of Example 15 represents improvement in the haze value compared to the haze value of Comparative Example 21 <[{(Haze value of Comparative Example 21) - (Haze value of Example 15)}/(Haze value of Comparative Example 21)] × 100>.

Regarding "Haze value improvement percent (%)" in Table 5, the value of Example 16 represents improvement in the haze value compared to the haze value of Comparative Example 22 <[{(Haze value of Comparative Example 22) - (Haze value of Example 16))}/(Haze value of Comparative Example 22)] × 100>.

The value of Example 17 represents improvement in the haze value compared to the haze value of Comparative Example 23 <[{(Haze value of Comparative Example 23) - (Haze value of Example 17)}/(Haze value of Comparative Example 23)] × 100>.

The value of Example 18 represents improvement in the haze value compared to the haze value of Comparative Example 24 <[{(Haze value of Comparative Example 24) - (Haze value of Example 18)}/(Haze value of Comparative Example 24)] × 100>.

**[Table 2]**

| | | Example 5 | Example 6 | Comparative Example 10 | Example 7 | Example 8 | Comparative Example 11 |
|---|---|---|---|---|---|---|---|
| Polyolefin resin | | P-1 | P-1 | P-1 | P-1 | P-1 | P-1 |
| Diacetal composition | | Example 1 | Example 2 | Comparative Example 1 | Example 1 | Example 2 | Comparative Example 1 |
| Addition amount of component (A) | [ppm] | 2000 | 2000 | 2000 | 2500 | 2500 | 2500 |
| Addition amount of component (B) | [ppm] | 680 | 673 | 0 | 850 | 841 | 0 |
| Addition amount of component (C) | [ppm] | 41 | 19 | 0 | 51 | 24 | 0 |
| Total addition amount | [ppm] | 2721 | 2692 | 2000 | 3401 | 3365 | 2500 |
| Evaluation of transparency-improving effect | Evaluation | ○○ | ○○ | × | ○ | ○ | × |
| | Haze value improvement percent ([%]) | 18.5 | 14.9 | - | 7.1 | 5.6 | - |

**[Table 3]**

| | | Example 9 | Example 10 | Example 11 | Example 12 | Comparative Example 12 | Comparative Example 13 | Comparative Example 14 | Comparative Example 15 | Comparative Example 16 | Comparative Example 17 | Comparative Example 18 |
|---|---|---|---|---|---|---|---|---|---|---|---|---|
| Polyolefin resin | | P-2 | P-2 | P-2 | P-2 | P-2 | P-2 | P-2 | P-2 | P-2 | P-2 | P-2 |
| Diacetal composition | | Example 1 | Example 2 | Example 3 | Example 4 | Comparative Example 1 | Comparative Example 2 | Comparative Example 3 | Comparative Example 4 | Comparative Example 5 | Comparative Example 6 | Comparative Example 7 |
| Addition amount of component (A) | [ppm] | 2000 | 2000 | 2000 | 2000 | 2000 | 2000 | 2000 | 2000 | 2000 | 2000 | 2000 |
| Addition amount of component (B) | [ppm] | 680 | 673 | 882 | 519 | 0 | 332 | 168 | 67 | 667 | 0 | 668 |
| Addition amount of component (C) | [ppm] | 41 | 19 | 59 | 78 | 0 | 40 | 40 | 40 | 0 | 41 | 3 |
| Total addition amount | [ppm] | 2721 | 2692 | 2941 | 2597 | 2000 | 2372 | 2208 | 2107 | 2667 | 2041 | 2671 |
| Evaluation of transparency-improving effect | Evaluation | ○ | ○ | ○ | ○ | × | × | × | × | × | × | × |
| | Haze value improvement percent ([%]) | 5.5 | 6.8 | 5.0 | 5.3 | - | 3.2 | 1.0 | 1.5 | 2.8 | 3.8 | 3.8 |

**[Table 4]**

| | | Example 13 | Comparative Example 19 | Example 14 | Comparative Example 20 | Example 15 | Comparative Example 21 |
|---|---|---|---|---|---|---|---|
| Polyolefin resin | | P-3 | P-3 | P-3 | P-3 | P-3 | P-3 |
| Diacetal composition | | Example 1 | Comparative Example 1 | Example 1 | Comparative Example 1 | Example 1 | Comparative Example 1 |
| Addition amount of component (A) | [ppm] | 2000 | 2000 | 2500 | 2500 | 3000 | 3000 |
| Addition amount of component (B) | [ppm] | 680 | 0 | 850 | 0 | 1020 | 0 |
| Addition amount of component (C) | [ppm] | 41 | 0 | 51 | 0 | 61 | 0 |
| Total addition amount | [ppm] | 2721 | 2000 | 3401 | 2500 | 4082 | 3000 |
| Evaluation of transparency-improving effect | Evaluation | ○○ | × | ○○ | × | ○○ | × |
| | Haze value improvement percent ([%]) | 14.0 | - | 63.6 | - | 64.2 | - |

**[Table 5]**

| | | Example 16 | Comparative Example 22 | Example 17 | Comparative Example 23 | Example 18 | Comparative Example 24 |
|---|---|---|---|---|---|---|---|
| Polyolefin resin | | P-3 | P-3 | P-3 | P-3 | P-3 | P-3 |
| Diacetal composition | | Example 1 | Comparative Example 1 | Example 1 | Comparative Example 1 | Example 1 | Comparative Example 1 |
| Addition amount of component (A) | [ppm] | 2000 | 2000 | 2500 | 2500 | 3000 | 3000 |
| Addition amount of component (B) | [ppm] | 680 | 0 | 850 | 0 | 1020 | 0 |
| Addition amount of component (C) | [ppm] | 41 | 0 | 51 | 0 | 61 | 0 |
| Total addition amount | [ppm] | 2721 | 2000 | 3401 | 2500 | 4082 | 3000 |
| Evaluation of transparency-improving effect | Evaluation | ○○ | × | ○ | × | ○ | × |
| | Haze value improvement percent ([%]) | 12.0 | - | 6.6 | - | 8.1 | - |

The Examples demonstrate that the diacetal composition of the present invention can reduce adherence to metal, imparts excellent low-temperature processability to polyolefin resins, and has an excellent transparency-improving effect on polyolefin resins.

While injection molding of the resin (P-1), the resin (P-2), and the resin (P-3) with conventional nucleating agents requires raising the resin temperature to a point at which the nucleating agents melt (e.g., around 240°C in Comparative Example 11), the use of the diacetal composition of the present invention enabled injection molding at a resin temperature of 210°C or lower.

In other words, it was demonstrated that the diacetal composition also imparts excellent low-temperature processability to polyolefin resins.

### INDUSTRIAL APPLICABILITY

The diacetal composition of the present invention can reduce adherence to metal, imparts excellent low-temperature processability to polyolefin resins, and has an excellent transparency-improving effect on polyolefin resins. The diacetal composition is therefore useful as a nucleating agent for a polyolefin resin.

## Claims

1. A diacetal composition comprising:
(A) a diacetal compound;
(B) an organic acid monoglyceride; and
(C) at least one of a sulfate ester salt or a sulfonate salt,
the diacetal composition containing
the diacetal compound (A) in an amount of 67 to 80 parts by mass,
the organic acid monoglyceride (B) in an amount of 17 to 30 parts by mass, and
the at least one of the sulfate ester salt or the sulfonate salt (C) in an amount of 0.5 to 3 parts by mass,
based on 100 parts by mass of a total amount of the diacetal compound (A), the organic acid monoglyceride (B), and the at least one of the sulfate ester salt or the sulfonate salt (C).

2. The diacetal composition according to claim 1,
wherein the diacetal compound (A) is 1,3:2,4-bis-O-(3',4'-dimethylbenzylidene)-D-sorbitol.

3. The diacetal composition according to claim 1 or 2,
wherein the organic acid monoglyceride (B) is glycerol monostearate.

4. The diacetal composition according to claim 1 or 2,
wherein the at least one of the sulfate ester salt or the sulfonate salt (C) is sodium lauryl sulfate.

5. The diacetal composition according to claim 1 or 2, containing the diacetal compound (A) in an amount of 70 to 75 parts by mass.

6. The diacetal composition according to claim 1 or 2, containing the organic acid monoglyceride (B) in an amount of 20 to 25 parts by mass.

7. The diacetal composition according to claim 1 or 2, containing the at least one of the sulfate ester salt or the sulfonate salt (C) in an amount of 1 to 2 parts by mass.

8. The diacetal composition according to claim 1 or 2, which is a nucleating agent for a polyolefin resin.

9. A polyolefin resin composition comprising:
a polyolefin resin; and
the diacetal composition according to claim 1 or 2.

10. The polyolefin resin composition according to claim 9, containing the diacetal compound (A) in an amount of 1500 to 3500 ppm, the organic acid monoglyceride (B) in an amount of 500 to 1200 ppm, and the at least one of the sulfate ester salt or the sulfonate salt (C) in an amount of 12 to 120 ppm.

11. A polyolefin resin molded article obtained using the polyolefin resin composition according to claim 9 as a raw material.

12. A method for producing a polyolefin resin molded article, the method comprising molding the polyolefin resin composition according to claim 9 at a resin temperature of 210°C or lower to produce a polyolefin resin molded article.
